(19) Europäisches Patentamt / European Patent Office / Office européen des brevets

(11) **EP 2 551 740 B1**

(12) **FASCICULE DE BREVET EUROPEEN**

(45) Date de publication et mention
de la délivrance du brevet:
**26.11.2014 Bulletin 2014/48**

(51) Int Cl.:
***G05D 1/06*** *(2006.01)*

(21) Numéro de dépôt: **12004967.1**

(22) Date de dépôt: **04.07.2012**

(54) **Procédé d'aide au pilotage, dispositif d'aide au pilotage, et aéronef**

Verfahren und Vorrichtung zur Unterstützung der Steuerung eines Luftfahrzeugs, und Luftfahrzeug

Piloting assistance method, piloting assistance device and aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.07.2011 FR 1102368**

(43) Date de publication de la demande:
**30.01.2013 Bulletin 2013/05**

(73) Titulaire: **Airbus Helicopters
13725 Marignane Cedex (FR)**

(72) Inventeur: **Eglin, Paul
13830 Roquefort La Bedoule (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**EP-A1- 1 598 720      FR-A1- 2 783 500
FR-A1- 2 887 065      US-A- 4 004 758**

**Description**

La présente invention concerne un procédé d'aide au pilotage, un dispositif d'aide au pilotage, et un aéronef muni de ce dispositif de pilotage.

L'invention se situe donc dans le domaine technique des instruments d'aide au pilotage d'un aéronef, et plus particulièrement d'un giravion.

Le document EP 1 598 720 présente un indicateur de pilotage muni d'une unité de calcul. L'unité de calcul affiche sur une unité de visualisation un symbole représentant une pente totale maximale en montée d'un aéronef, ce symbole apparaissant en surimpression sur une représentation du relief du terrain.

On rappelle que la pente sol courante d'un aéronef représente l'angle du vecteur vitesse sol de cet aéronef par rapport à un plan normal à la direction de la pesanteur. La pente sol courante permet de connaître la trajectoire à court terme de l'aéronef.

Par contre, la pente totale sol d'un aéronef permet de prévoir la trajectoire à long-terme de l'aéronef par rapport au sol et est fonction du bilan énergétique total de l'avion. La pente totale sol d'un aéronef traduit l'accélération instantanée sur trajectoire de cet aéronef.

On note que l'on entend par pente totale air la trajectoire à long-terme de l'aéronef par rapport à la masse d'air entourant l'aéronef.

Par ailleurs, parmi les aéronefs, on connaît les giravions munis d'une voilure tournante de sustentation, cette voilure tournante pouvant éventuellement participer à la propulsion du giravion.

Lors d'une descente lente d'un giravion, un phénomène dangereux désigné « état de vortex » peut apparaître dans des conditions particulières. Cet état de vortex entraîne une perte générale de sustentation et de maniabilité.

Ce phénomène peut apparaître pour une vitesse air verticale d'un l'hélicoptère inférieure à un premier seuil, et avec une vitesse air de translation inférieure à un deuxième seuil.

L'état de vortex est donc dangereux. Toutefois, un pilote peut sortir de cet état de vortex par exemple soit en amorçant une translation, soit en augmentant la vitesse air verticale de l'aéronef afin que cet aéronef ne se situe plus dans le domaine de vol à risque.

En outre, parmi les giravions, on connaît les aéronefs hybrides à voilure tournante munis d'au moins une hélice propulsive. Cette hélice peut générer une traction positive à savoir selon une direction allant de l'arrière de l'aéronef vers l'avant de l'aéronef, ou encore une traction négative à savoir selon une direction allant de l'avant de l'aéronef vers l'arrière de l'aéronef.

Dès lors, la chaîne de transmission mécanique entraînant l'hélice peut faire l'objet d'une limitation, notamment une limitation lorsque l'hélice exerce une traction négative. Une telle limitation est dénommée « limite de puissance négative » par commodité.

Cette limitation est de nature à limiter la pente totale sol de l'aéronef en descente.

On connaît aussi les documents FR2783500A1, FR2887065A1, et US4004758A.

La présente invention a alors pour objet de proposer un procédé d'aide au pilotage en descente d'un aéronef hybride.

Selon l'invention, un procédé d'aide au pilotage d'un aéronef hybride à voilure tournante muni d'au moins une hélice propulsive, est notamment remarquable en ce que :

- on détermine au moins une marge de poussée de l'hélice entre une poussée courante exercée par cette hélice et une poussée seuil correspondant à une limite de puissance négative autorisée sur une chaîne de transmission mécanique entraînant cette hélice,

- on détermine une pente totale sol minimale principale que peut suivre l'aéronef en descente en fonction de cette marge de poussée,

- on présente sur une unité de visualisation un symbole principal de pente totale sol minimale que peut suivre l'aéronef en descente, ce symbole principal étant fonction au moins de la pente totale sol minimale principale et apparaissant en surimpression d'une représentation de l'environnement existant à l'avant de l'aéronef.

On entend par environnement existant à l'avant de l'aéronef, l'environnement vers lequel l'aéronef se dirige en vol d'avancement, la représentation étant soit un symbole matérialisant une zone d'atterrissage, soit ladite zone d'atterrissage vue directement par le pilote en tête haute.

Ainsi, la marge de poussée traduit la décélération maximale que peut subir l'aéronef, la pente totale sol minimale principale étant déterminée en fonction de cette décélération maximale. On affiche alors sur une unité de visualisation, la pente totale sol minimale que peut suivre l'aéronef. En fonction de cette information, un pilote peut par exemple déterminer si une aire d'atterrissage donnée peut être atteinte.

Le procédé peut comporter une ou plusieurs des caractéristiques additionnelles qui suivent.

Selon une réalisation, pour déterminer la marge de poussée, on peut :

- déterminer la vitesse d'avancement courante de l'aéronef,

- déterminer la puissance courante développée par l'hélice,

- déterminer la poussée courante exercée par l'hélice en utilisant une première base de données prédéterminée donnant la poussée courante en fonction de la vitesse d'avancement courante et de la puissance courante,

- déterminer la poussée seuil en utilisant une deuxième base de données prédéterminée donnant la poussée seuil en fonction de la vitesse d'avancement courante,

- déterminer la marge de poussée, cette marge de poussée étant égale à la différence entre la poussée courante et la poussée seuil.

Eventuellement, la vitesse d'avancement correspond à la vitesse air indiquée connue sous l'acronyme « IAS », ou encore à la vitesse dite « vitesse vraie » et connue sous l'acronyme « TAS ». On se référera à la littérature pour obtenir des informations sur les moyens permettant d'obtenir ces vitesses.

De plus, la puissance courante peut être déterminée à l'aide d'un moyen de mesure du couple de l'hélice et d'un moyen de mesure de la vitesse angulaire de rotation de l'hélice.

La première base de données et la deuxième base de données peuvent être obtenues à l'aide de polaires poussée / puissance d'une hélice à vitesse d'avancement constante.

Par exemple, un constructeur établit par essai un diagramme présentant en abscisses la poussée exercée par l'hélice et en ordonnées la puissance développée par cette hélice. Ce diagramme présente alors une pluralité de polaires, chaque polaire étant associée à une vitesse d'avancement de l'aéronef.

Pour une puissance courante et une vitesse d'avancement données, on en déduit aisément la poussée courante.

Il est alors aisé de construire une base de données à l'aide de ce diagramme.

De plus, le constructeur établit une puissance minimale autorisée. La poussée seuil à une vitesse d'avancement donnée correspond alors à l'intersection entre la polaire associée à cette vitesse d'avancement donnée et une droite parallèle à l'axe des abscisses passant par ladite puissance minimale autorisée.

Le constructeur peut donc bâtir aisément la deuxième base de données.

Il est à noter que chaque base de données peut être une base de données en tant que telle, ou tout autre moyen équivalent utilisant des courbes ou des équations par exemple.

Selon un autre aspect, l'aéronef pouvant comporter une pluralité d'hélices associées chacune à une marge de poussée, on détermine la pente totale sol minimale principale d'approche de l'aéronef en fonction de la plus faible marge de poussée.

Par exemple, l'aéronef peut comporter deux hélices fournissant des poussées distinctes pour compenser le couple exercé par la voiture tournante sur le fuselage de l'aéronef. Dès lors, une première hélice induit une première marge de poussée supérieure à une deuxième marge de poussée induite par la deuxième hélice. On détermine alors la pente totale sol minimale principale en fonction de la plus petite marge de poussée, soit en fonction de la deuxième marge de poussée selon cet exemple.

Par ailleurs, on peut déterminer la pente totale sol minimale principale en utilisant la relation suivante :

$$\gamma_{min} = \gamma - \left(\frac{1}{g} * \frac{1}{m} * \Delta P\right)$$

où « $\gamma_{min}$ » représente la pente totale sol minimale principale, « $\gamma$ » représente une pente sol courante, « g » représente l'accélération de la pesanteur, « m » représente la masse de l'aéronef, et « $\Delta P$ » représente ladite marge de poussée.

Selon un premier mode de réalisation, le symbole principal illustre la pente totale sol minimale principale, ce symbole principal n'étant pas affiché lorsque l'aéronef a une vitesse d'avancement inférieure à une limite prédéterminée.

En effet, en dessous de la limite prédéterminée, on constate étonnamment qu'il n'y a plus de risque d'atteindre une limitation de la chaîne de transmission mécanique. Dès lors, la pente totale minimale n'est plus limitée selon cette réalisation. On peut donc inhiber l'affichage du symbole principal.

Par contre, selon un deuxième mode de réalisation, on peut déterminer une pente totale air minimale pour éviter un état de vortex puis on transforme cette pente totale air minimale en une pente totale sol minimale secondaire. Le symbole principal illustre alors la pente totale sol minimale principale lorsque cette pente totale sol minimale principale est supérieure à la pente totale sol minimale secondaire, ce symbole principal illustrant la pente totale sol minimale secondaire lorsque cette pente sol minimale principale est inférieure à la pente totale sol minimale secondaire.

Selon une variante, lorsque la vitesse d'avancement longitudinale de l'aéronef est inférieure à une limite prédéterminée, le symbole principal peut illustrer la pente totale sol minimale secondaire. Par contre, lorsque la vitesse d'avancement longitudinale de l'aéronef est supérieure ou égale à une limite prédéterminée, le symbole principal peut illustrer la pente totale sol minimale principale.

Cette réalisation présente l'avantage de réduire les risques d'apparition de l'état de vortex.

Ainsi, le constructeur peut établir par simulation ou essais en vol un domaine de vortex délimité par une courbe fournissant une vitesse air horizontal de l'aéronef en fonction d'une vitesse air verticale de cet aéronef.

Dès lors, on mesure en vol la vitesse air horizontale courante, par exemple en utilisant un système connu sous l'acronyme LOAS soit « low air speed sensor » en langue anglaise ou encore « capteur de basse vitesse » en langue française.

On détermine alors une vitesse air verticale limite à l'aide de ladite courbe et de la vitesse air horizontale courante mesurée.

On en déduit alors la pente totale sol minimale secondaire à l'aide de la relation suivante

$$\gamma_{air\,min\,ivortex} = Arc\sin\left(\frac{V_{zair\,seuil}}{V_{hair}}\right)$$

Où « $Y_{air\,min\,ivortex}$ » représente la pente totale sol minimale secondaire, « $V_{zair\,seuil}$ » représente la vitesse air verticale limite et « $V_{hair}$ » représente la vitesse air horizontale courante.

On comprend donc que, indépendamment du mode de réalisation, le symbole principal est fonction de la pente totale sol minimale principale :

- en représentant selon le premier mode de réalisation, la pente totale sol minimale principale et,

- en représentant selon le deuxième mode de réalisation, la pente totale sol minimale principale ou la pente totale sol minimale secondaire en fonction de la valeur de cette pente totale sol minimale principale relativement à la valeur de la pente totale sol minimale secondaire.

Selon un autre aspect, on peut présenter sur une unité de visualisation au moins un symbole secondaire à choisir dans une liste incluant au moins l'un des symboles suivants :

- un premier symbole secondaire illustrant une pente totale sol maximale que peut suivre l'aéronef en montée,

- un deuxième symbole secondaire illustrant la pente sol courante de l'aéronef

- un troisième symbole secondaire illustrant une piste d'atterrissage.

Outre un procédé, l'invention vise un dispositif mettant en oeuvre ce procédé.

Un tel dispositif d'aide au pilotage d'un aéronef hybride à voilure tournante muni d'au moins une hélice propulsive, est notamment remarquable en ce qu'il comporte une unité de calcul et une unité de visualisation, l'unité de calcul exécutant des instructions mémorisées :

- pour déterminer au moins une marge de poussée de l'hélice entre une poussée courante exercée par cette hélice et une poussée seuil correspondant à une limite de puissance négative autorisée sur une chaîne de transmission mécanique entraînant cette hélice,

- pour déterminer une pente totale sol minimale principale que peut suivre l'aéronef en descente en fonction de cette marge de poussée,

- pour présenter sur l'unité de visualisation un symbole principal de pente totale sol minimale que peut suivre l'aéronef en descente, ce symbole principal étant fonction au moins de la pente totale sol minimale principale et apparaissant en surimpression d'une représentation de l'environnement existant à l'avant de l'aéronef.

Ce dispositif peut comporter une ou plusieurs des caractéristiques additionnelles.

Ainsi, le dispositif peut comporter un premier moyen de détermination de la vitesse d'avancement courante de l'aéronef, et un deuxième moyen de détermination de la puissance courante développée par ladite hélice, le premier moyen et le deuxième moyen étant reliés à l'unité de calcul.

Le premier moyen peut comprendre un tube de Pitot par exemple et une prise de pression statique, le deuxième moyen pouvant mettre en oeuvre un moyen de mesure du couple de l'hélice et un capteur de la vitesse angulaire de rotation de cette hélice.

En outre, le dispositif peut comporter un troisième moyen de détermination de la pente sol courante de l'aéronef. Ce troisième moyen peut comprendre un système connu sous l'acronyme GPS (global positioning system) ou INS (inertial navigation system)

De plus, selon une réalisation, pour déterminer une pente totale sol minimale secondaire visant à minimiser les risques d'apparition d'un état de vortex, ledit dispositif comporte un capteur de basse vitesse.

Enfin, l'invention vise un aéronef hybride à voilure tournante muni d'au moins une hélice propulsive, cet aéronef comprenant un dispositif selon l'invention.

L'invention et ses avantages apparaîtront avec plus de détails dans le cadre de la description qui suit avec des exemples de réalisation donnés à titre illustratif en référence aux figures annexées qui représentent :

- la figure 1, un schéma illustrant un aéronef selon l'invention,

- la figure 2, un diagramme illustrant le procédé de détermination d'une marge de poussée,

- les figures 3 et 4, des vues de l'unité de visualisation présentant différentes configurations de vol.

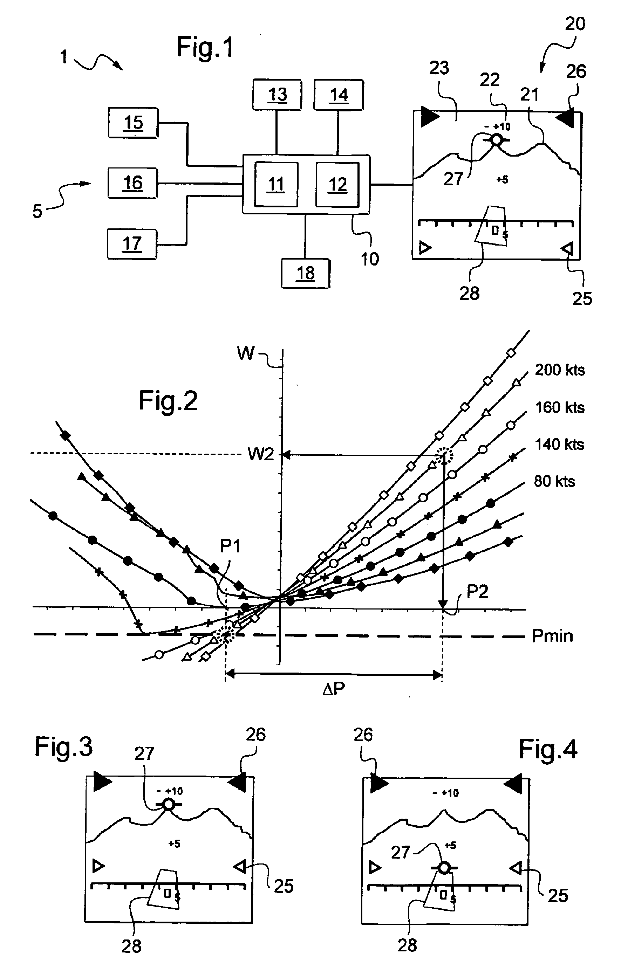

La figure 1 présente un aéronef 1 muni d'une voilure tournante et d'au moins un organe propulsif complémentaire, tel qu'une hélice propulsive.

Pour ne pas alourdir inutilement la figure 1, cette figure 1 montre uniquement un dispositif 5 d'aide au pilotage de l'aéronef.

Ce dispositif 5 inclut une unité de calcul 10, l'unité de calcul étant par exemple pourvue d'un processeur 11 ou équivalent et d'une mémoire 12. Dès lors, le processeur 11 exécute les instructions mémorisées dans la mémoire 12 pour mettre en oeuvre le procédé d'aide au pilotage selon l'invention.

Par suite, l'unité de calcul détermine au moins une marge de poussée ΔP de chaque hélice entre une poussée courante P2 exercée par cette hélice et une poussée seuil P1 correspondant à une limite de puissance négative Pmin prédéterminée par le constructeur.

En référence à la figure 2, le constructeur peut établir un diagramme présentant en abscisses la poussée exercée par une hélice et en ordonnées la puissance développée par l'hélice.

Ce diagramme présente alors une pluralité de polaires, chaque polaire correspondant à une vitesse d'avancement courante, une vitesse air vraie TAS par exemple.

Pour une puissance courante W2 donnée et une vitesse d'avancement courante donnée, on en déduit une poussée courante P2. La figure 2 illustre l'exemple d'un aéronef ayant une vitesse d'avancement courante de 200 noeuds (Kts).

De plus, le constructeur établit une limite de puissance négative Pmin. L'intersection entre une polaire associée à une vitesse d'avancement particulière et la limite de puissance négative Pmin permet d'établir la poussée seuil P1 associée à cette vitesse d'avancement particulière.

Par exemple, la figure 2 présente la poussée seuil P1 induite par un vol à une vitesse d'avancement courante de 200 noeuds (Kts).

Il est à noter que lorsque l'aéronef évolue suivant une vitesse d'avancement courante inférieure à une limite prédéterminée, une limite de l'ordre de 80 noeuds (Kts) suivant l'exemple, la limite de puissance négative Pmin ne peut pas être atteinte.

A l'aide de ce diagramme, le constructeur peut établir une première base de données prédéterminée donnant la poussée courante P2 d'une hélice en fonction de la vitesse d'avancement courante et de la puissance courante W2 de l'hélice, et une deuxième base de données prédéterminée donnant la poussée seuil P1 de l'hélice en fonction de la vitesse d'avancement courante de l'aéronef.

Ces bases de données peuvent prendre la forme d'une base de données en tant que telle, d'un fichier de données, de lois et de tout moyen équivalent.

En référence à la figure 1, l'unité de calcul 10 est alors reliée à une première base de données 13 relative à la poussée courante de l'hélice et à une deuxième base de données 14 relative à la poussée seuil de l'hélice.

En outre, l'unité de calcul 10 est reliée à un premier moyen 15 de détermination de la vitesse d'avancement courante de l'aéronef, et à un deuxième moyen 16 de détermination de la puissance courante W2 développée par cette hélice.

Pour déterminer la marge de puissance, l'unité de calcul 10 communique avec le premier moyen 15 pour déterminer la vitesse d'avancement courante de l'aéronef.

De plus, l'unité de calcul 10 communique avec le deuxième moyen 16 pour déterminer la puissance courante W2 développée par l'hélice.

Par conséquent, l'unité de calcul 10 détermine la poussée courante P2 exercée par l'hélice en utilisant la première base de données 13 prédéterminée, et la poussée seuil P1 en utilisant la deuxième base de données 14.

L'unité de calcul 10 en déduit la marge de poussée ΔP, cette marge de poussée étant égale à la différence de la poussée courante P2 et de la poussée seuil P1.

Par suite, l'unité de calcul 10 détermine une pente totale sol minimale principale $\gamma_{min}$ que peut suivre l'aéronef en descente en utilisant cette marge de poussée ΔP.

Favorablement, l'unité de calcul 10 est par ailleurs reliée à un troisième moyen 17 de détermination de la pente sol courante γ de l'aéronef.

Dès lors, l'unité de calcul 10 détermine la pente totale sol minimale principale en utilisant la relation suivante :

$$\gamma_{min} = \gamma - \left( \frac{1}{g} * \frac{1}{m} * \Delta P \right)$$

où « $\gamma_{min}$ » représente la pente totale sol minimale principale, « γ » représente une pente sol courante, « *g* » représente l'accélération de la pesanteur, « *m* » représente la masse de l'aéronef, et « *ΔP* » représente ladite marge de poussée.

Lorsque l'aéronef comporte une pluralité d'hélices, l'unité de calcul 10 peut déterminer la pente totale sol minimale principale $Y_{min}$ d'approche de l'aéronef en fonction de la plus faible marge de poussée.

En outre, on note que l'unité de calcul 10 est reliée à une unité de visualisation 20 pourvue d'un écran de visualisation 23.

Cette unité de visualisation 20 présente une représentation 21 de l'environnement présent à l'extérieur de l'aéronef, ainsi qu'une échelle graduée 22 en degrés.

Cette représentation 21 et cette échelle peuvent être déterminées en coopération avec des moyens usuels par l'unité de visualisation 20, ou l'unité de calcul 10 voire par une autre unité de l'aéronef.

L'unité de calcul 10 requiert alors l'affichage sur l'écran de visualisation 23 d'un symbole principal 25 de pente totale sol minimale que peut suivre l'aéronef 1 en descente, le symbole principal 25 apparaissant en surimpression de la représentation 21 de l'environnement existant à l'avant de l'aéronef.

Selon une réalisation préférée, ce symbole principal affiche la valeur en degrés de la pente totale sol minimale principale $Y_{min}$.

Selon une réalisation alternative, l'unité de calcul est de plus reliée à un ensemble de moyens 18 comprenant un capteur de basse vitesse pour déterminer une pente totale sol minimale secondaire γ' visant à minimiser les risques d'apparition d'un état de vortex.

Selon cette réalisation alternative, l'unité de calcul 5 détermine la pente totale sol minimale secondaire γ' pour éviter cet état de vortex.

Par suite, le symbole principal 25 illustre la valeur la plus faible à choisir entre la pente totale sol minimale principale $γ_{min}$ et la pente totale sol minimale secondaire γ'.

Indépendamment de la réalisation, l'unité de calcul 5 peut présenter sur l'unité de visualisation 20 au moins un symbole secondaire à choisir dans une liste incluant au moins l'un des symboles suivants :

- un premier symbole secondaire 26 illustrant une pente totale sol maximale que peut suivre l'aéronef en montée,

- un deuxième symbole secondaire 27 illustrant la pente sol courante de l'aéronef,

- un troisième symbole secondaire 28 illustrant une piste d'atterrissage.

En référence à la figure 1, lorsque le symbole principal 25 est situé sous le troisième symbole, on comprend que l'aéronef 1 peut atteindre la piste d'atterrissage compte tenu de la pente sol minimale autorisée.

A l'inverse, en référence à la figure 3, le symbole principal 25 est situé au dessus du troisième symbole 28. Le deuxième symbole 27 représentant la pente sol courante étant au contraire au dessus du symbole principal 25, le pilote peut réduire sa vitesse d'avancement courante pour atteindre la piste d'atterrissage.

A l'inverse, en référence à la figure 4, si le deuxième symbole 27 et le symbole principal 25 pointent une même valeur, le pilote n'a plus de marge pour réduire sa vitesse d'avancement. Le pilote doit donc refaire son approche pour atteindre la piste d'atterrissage.

## Revendications

**1.** Procédé d'aide au pilotage d'un aéronef (1) hybride à voilure tournante muni d'au moins une hélice propulsive, **caractérisé en ce que** :

- on détermine au moins une marge de poussée (ΔP) de ladite hélice entre une poussée courante (P2) exercée par cette hélice et une poussée seuil (P1) correspondant à une limite de puissance négative (Pmin) autorisée sur une chaîne de transmission mécanique entraînant cette hélice,

- on détermine une pente totale sol minimale principale ($γ_{min}$) que peut suivre l'aéronef en descente en fonction de ladite marge de poussée (ΔP),

- on présente sur une unité de visualisation (20) un symbole principal (25) de pente totale sol minimale que peut suivre l'aéronef (1) en descente, ce symbole principal étant fonction au moins de la pente totale sol minimale principale ($γ_{min}$) et apparaissant en surimpression d'une représentation (21) de l'environnement existant à l'avant de l'aéronef.

**2.** Procédé selon la revendication 1, **caractérisé en ce que** pour déterminer ladite marge de poussée (ΔP) :

- on détermine la vitesse d'avancement courante de l'aéronef,
- on détermine la puissance courante (W2) développée par ladite hélice,
- on détermine la poussée courante (P2) exercée par ladite hélice en utilisant une première base de données prédéterminée donnant la poussée courante (P2) en fonction de ladite vitesse d'avancement courante et de ladite puissance courante (W2),
- on détermine la poussée seuil (P1) en utilisant une deuxième base de données prédéterminée donnant ladite poussée seuil en fonction de ladite vitesse d'avancement courante,
- on détermine la marge de poussée (ΔP), cette marge de poussée étant égale à la différence entre la poussée courante (P2) et de la poussée seuil (P1).

**3.** Procédé selon l'une quelconque des revendications 1 à 2, **caractérisé en ce que**, l'aéronef (1) comportant une pluralité d'hélices associées chacune à une marge de poussée, on détermine la pente totale sol minimale principale ($γ_{min}$) d'approche de l'aéronef en fonction de la plus faible marge de poussée.

**4.** Procédé selon l'une quelconque des revendications 1 à 3, **caractérisé en ce qu'**on détermine ladite pente totale sol minimale principale en utilisant la relation suivante :

$$\gamma_{\min} = \gamma - \left( \frac{1}{g} * \frac{1}{m} * \Delta P \right)$$

où « $\gamma_{\min}$ » représente la pente totale sol minimale principale, « y » représente une pente sol courante, « $g$ » représente l'accélération de la pesanteur, « $m$ » représente la masse de l'aéronef, et « $\Delta P$ » représente ladite marge de poussée.

5. Procédé selon l'une quelconque des revendications 1 à 4,
   **caractérisé en ce que** ledit symbole principal (25) illustre la pente totale sol minimale principale ($\gamma_{\min}$), ce symbole principal (25) n'étant pas affiché lorsque ledit aéronef a une vitesse d'avancement inférieure à une limite prédéterminée.

6. Procédé selon l'une quelconque des revendications 1 à 4,
   **caractérisé en ce qu'**on détermine une pente totale air minimale pour éviter un état de vortex puis on transforme cette pente totale air minimale en une pente totale sol minimale secondaire ($\gamma'$), ledit symbole principal (25) illustrant la pente totale sol minimale principale ($\gamma_{\min}$) lorsque cette pente totale sol minimale principale ($\gamma_{\min}$) est supérieure à la pente totale sol minimale secondaire ($\gamma'$), ledit symbole principal (25) illustrant la pente totale sol minimale secondaire ($\gamma'$) lorsque cette pente sol minimale principale ($\gamma_{\min}$) est inférieure à la pente totale sol minimale secondaire ($\gamma'$).

7. Procédé selon l'une quelconque des revendications 1 à 6,
   **caractérisé en ce qu'**on présente sur une unité de visualisation (20) au moins un symbole secondaire à choisir dans une liste incluant au moins l'un des symboles suivants :

   - un premier symbole secondaire (26) illustrant une pente totale sol maximale que peut suivre l'aéronef en montée,
   - un deuxième symbole secondaire (27) illustrant la pente sol courante de l'aéronef
   - un troisième symbole secondaire (28) illustrant une piste d'atterrissage.

8. Dispositif (5) d'aide au pilotage d'un aéronef (1) hybride à voilure tournante muni d'au moins une hélice propulsive,
   **caractérisé en ce qu'**il comporte une unité de calcul (10) et une unité de visualisation (20), l'unité de calcul (10) exécutant des instructions mémorisées :

   - pour déterminer au moins une marge de poussée ($\Delta P$) de ladite hélice entre une poussée courante (P2) exercée par cette hélice et une poussée seuil (P1) correspondant à une limite de puissance négative (Pmin) autorisée sur une chaîne de transmission mécanique entraînant cette hélice,
   - pour déterminer une pente totale sol minimale principale ($\gamma_{\min}$) que peut suivre l'aéronef en descente en fonction de ladite marge de poussée ($\Delta P$),
   - pour présenter sur ladite unité de visualisation (20) un symbole principal (25) de pente totale sol minimale que peut suivre l'aéronef (1) en descente, ce symbole principal (25) étant fonction au moins de la pente totale sol minimale principale ($\gamma_{\min}$) et apparaissant en surimpression d'une représentation (21) de l'environnement existant à l'avant de l'aéronef (1).

9. Dispositif selon la revendication 8,
   **caractérisé en ce qu'**il comporte un premier moyen (15) de détermination de la vitesse d'avancement courante de l'aéronef, et un deuxième moyen (16) de détermination de la puissance courante développée par ladite hélice, le premier moyen (15) et le deuxième moyen (16) étant reliés à l'unité de calcul (10).

10. Dispositif selon l'une quelconque des revendications 8 à 9,
    **caractérisé en ce qu'**il comporte un troisième moyen (17) de détermination de la pente sol courante ($\gamma$) de l'aéronef (1).

11. Dispositif selon l'une quelconque des revendications 8 à 10,
    **caractérisé en ce que**, pour déterminer une pente totale sol minimale secondaire ($\gamma'$) visant à minimiser les risques d'apparition d'un état de vortex, ledit dispositif (5) comporte un capteur de basse vitesse. '

12. Aéronef (1) hybride à voilure tournante muni d'au moins une hélice propulsive,
    **caractérisé en ce qu'**il comporte un dispositif (5) selon l'une quelconque des revendications 8 à 11.

**Patentansprüche**

1. Verfahren zur Unterstützung der Steuerung eines Drehflügel-Hybridluftfahrzeugs (1), welches mit mindestens einem Schubpropeller versehen ist,
   **dadurch gekennzeichnet, dass**

   - man mindestens einen Schubkraftspielraum ($\Delta P$) des Propellers zwischen einer aktuellen Schubkraft (P2), die von diesem Propeller ausgeübt wird, und einer Grenzschubkraft (P1), die einem negativen Schubgrenzwert (Pmin) entspricht, der für einen mechanischen Antriebsstrang, der den Propeller antreibt, erlaubt ist, bestimmt,
- man eine minimale bodenbezogene Hauptgesamtneigung ($\gamma_{min}$), der das Luftfahrzeug im Sinkflug in Abhängigkeit von dem Schubkraftspielraum ($\Delta$P) folgen kann, bestimmt,
- man auf einer Anzeigeeinheit (20) ein Hauptsymbol der minimalen bodenbezogenen Gesamtneigung darstellt, der das Luftfahrzeug (1) beim Sinkflug folgen kann, wobei dieses Hauptsymbol mindestens von der minimalen bodenbezogenen Hauptgesamtneigung ($\gamma_{min}$) abhängt und als Einblendung in einer Darstellung (21) der Umgebung vor dem Luftfahrzeug erscheint.

**2.** Verfahren nach Anspruch 1,
**dadurch gekennzeichnet, dass** um den Schubkraftspielraum ($\Delta$P) zu bestimmen:

- man die aktuelle Vortriebsgeschwindigkeit des Luftfahrzeugs bestimmt,
- die von dem Propeller aktuell entwickelte Leistung bestimmt wird,
- man die aktuelle Leistung (P2) bestimmt, die von dem Propeller erzeugt wird unter Verwendung einer ersten vorbestimmten Datenbasis, die den aktuellen Schub (P2) in Abhängigkeit von der aktuellen Vortriebsgeschwindigkeit und der aktuellen Leistung (W2) liefert,
- man den Grenzschub (P1) bestimmt unter Verwendung einer zweiten vorbestimmten Datenbasis, die den Grenzschub in Abhängigkeit von der Vortriebsgeschwindigkeit liefert,
- man den Schubkraftspielraum ($\Delta$P) bestimmt, wobei dieser Schubkraftspielraum gleich der Differenz zwischen der aktuellen Schubkraft (P2) und der Grenzschubkraft (P1) ist.

**3.** Verfahren nach einem der Ansprüche 1 bis 2,
**dadurch gekennzeichnet, dass**, wenn das Luftfahrzeug (1) eine Mehrzahl von Propellern aufweist, die jeweils mit einem Schubkraftspielraum verbunden sind, man die minimale bodenbezogene Hauptgesamtneigung ($\gamma_{min}$) beim Anflug des Luftfahrzeugs in Abhängigkeit von dem geringsten Schubkraftspielraum bestimmt.

**4.** Verfahren nach einem der Ansprüche 1 bis 3,
**dadurch gekennzeichnet, dass** die minimale bodenbezogene Hauptgesamtneigung bestimmt wird unter Verwendung der folgenden Gleichung:

$$\gamma_{min} = \gamma - \left(\frac{1}{g} * \frac{1}{m} * \Delta P\right)$$

wobei "$\gamma_{min}$" die minimale bodenbezogene Hauptgesamtneigung, "$\gamma$" die aktuelle bodenbezogene Gesamtneigung, "g" die Schwerkraft, "m" die Masse des Luftfahrzeugs, und "$\Delta$P" den Schubkraftspielraum bezeichnen.

**5.** Verfahren nach einem der Ansprüche 1 bis 4,
**dadurch gekennzeichnet, dass** das Hauptsymbol (25) die minimale Hauptgesamtneigung ($\gamma_{min}$) darstellt, wobei dieses Hauptsymbol (25) nicht angezeigt wird, wenn das Luftfahrzeug eine Vortriebsgeschwindigkeit hat, die kleiner als ein vorgegebener Grenzwert ist.

**6.** Verfahren nach einem der Ansprüche 1 bis 4,
**dadurch gekennzeichnet, dass** man die minimale luftbezogene Gesamtneigung bestimmt, um einen Wirbelzustand zu verhindern, und man diese minimale luftbezogene Gesamtneigung in eine minimale sekundäre bodenbezogene Gesamtneigung ($\gamma$') umwandelt, wobei das Hauptsymbol (25) die minimale bodenbezogene Hauptgesamtneigung ($\gamma_{min}$) bezeichnet, während diese minimale Hauptgesamtneigung ($\gamma_{min}$) größer ist als die minimale sekundäre bodenbezogene Gesamtneigung ($\gamma$') wobei das Hauptsymbol (25) die minimale sekundäre bodenbezogene Gesamtneigung ($\gamma$') bezeichnet, wenn diese minimale Hauptgesamtneigung ($\gamma_{min}$) kleiner ist als die minimale sekundäre bodenbezogene Gesamtneigung ($\gamma$').

**7.** Verfahren nach einem der Ansprüche 1 bis 6,
**dadurch gekennzeichnet, dass** auf einer Anzeigeeinheit (20) mindestens ein sekundäres Symbol dargestellt wird, das auszuwählen ist aus einer Liste, die mindestens eines der folgenden Symbole umfasst:

- ein erstes sekundäres Symbol (26), das eine maximale bodenbezogene Gesamtneigung, der das Luftfahrzeug im Steigflug folgen kann, anzeigt,
- ein zweites sekundäres Symbol (27), das die aktuelle bodenbezogene Neigung des Luftfahrzeugs anzeigt,
- ein drittes sekundäres Symbol (28), das eine Landebahn anzeigt.

**8.** Vorrichtung (5) zur Unterstützung der Steuerung eines Drehflügel-Hybridluftfahrzeugs (1), welches mit mindestens einem Schubpropeller versehen ist,
**dadurch gekennzeichnet, dass** sie eine Recheneinheit (10) und eine Anzeigeeinheit (20) aufweist, wobei die Recheneinheit (10) gespeicherte Befehle ausführt:

- um mindestens einen Schubkraftspielraum ($\Delta$P) des Propellers zwischen einer aktuellen Schubkraft (P2), die von diesem Propeller ausgeübt wird, und einer Grenzschubkraft (P1), die einem negativen Leistungsgrenzwert (Pmin) entspricht, der für einen mechanischen Antriebsstrang erlaubt ist, der diesen Propeller antreibt, zu bestimmen,

- um eine minimale bodenbezogene Hauptge-samtneigung ($\gamma_{min}$) zu bestimmen, der das Luftfahrzeug im Sinkflug in Abhängigkeit von dem Schubkraftspielraum ($\Delta$P) folgen kann, zu be-stimmen,

- um auf der Anzeigeeinheit (20) ein Hauptsignal (25) der minimalen bodenbezogenen Gesamtneigung anzuzeigen, der das Luftfahrzeug (1) im Sinkflug folgen kann, wobei dieses Hauptsymbol (25) von mindestens der minimalen bo-denbezogenen Hauptgesamtneigung ($\gamma_{min}$) ab-hängt, und als eine Einblendung auf einer Darstellung (21) der Umgebung vor dem Luftfahrzeug (1) erscheint.

**9.** Vorrichtung nach Anspruch 8,
**dadurch gekennzeichnet, dass** sie ein erstes Mittel (15) zur Bestimmung der aktuellen Vortriebsgeschwindigkeit des Luftfahrzeugs und ein zweites Mittel (16) zur Bestimmung der aktuellen von dem Propeller entwickelten Leistung aufweist, wobei das erste Mittel (15) und das zweite Mittel (16) mit der Recheneinheit (10) verbunden sind.

**10.** Vorrichtung nach einem der Ansprüche 8 bis 9,
**dadurch gekennzeichnet, dass** sie ein drittes Mittel (17) zur Bestimmung der aktuellen bodenbezo-genen Neigung ($\gamma$) des Luftfahrzeugs (1) aufweist.

**11.** Vorrichtung nach einem der Ansprüche 8 bis 10,
**dadurch gekennzeichnet, dass** zur Bestimmung einer minimalen sekundären bodenbezogenen Ge-samtneigung ($\gamma$'), wodurch die Risiken des Auftretens eines Wirbelzustands minimiert werden sollen, die Vorrichtung (5) einen Sensor zur Erfassung niedriger Geschwindigkeit aufweist.

**12.** Drehflügel-Hybridluftfahrzeug (1) mit mindestens einem Vortriebspropeller,
**dadurch gekennzeichnet, dass** es eine Vorrichtung (5) nach einem der Ansprüche 8 bis 11 aufweist.

**Claims**

**1.** Method for assisting the piloting of a hybrid aircraft (1) having a rotary wing and provided with at least one propulsive propeller,
**characterised in that**:

- at least one thrust margin ($\Delta$P) for said propeller between a current thrust (P2) exerted by said propeller and a threshold thrust (P1) corresponding to a negative power limit (Pmin) permitted on a mechanical transmission chain driving said propeller is determined,
- a main minimum total ground slope ($\gamma_{min}$) that can be followed by the aircraft in descent as a function of said thrust margin ($\Delta$P) is determined,
- a main symbol (25) for the minimum total ground slope that can be followed by the aircraft (1) in descent is displayed on a display unit (20), said main symbol being a function of at least the main minimum total ground slope ($\gamma_{min}$) and ap-pearing superimposed on a representation (21) of the surroundings existing in front of the aircraft.

**2.** Method according to claim 1,
**characterised in that** in order to determine said thrust margin ($\Delta$P) :

- the current forward speed of the aircraft is determined,
- the current power (W2) developed by said propeller is determined,
- the current thrust (P2) exerted by said propeller is determined by using a first predetermined database giving the current thrust (P2) as a function of said current forward speed and of said current power (W2),
- the threshold thrust (P1) is determined by using a second predetermined database giving said threshold thrust as a function of said current forward speed,
- the thrust margin ($\Delta$P) is determined, said thrust margin being equal to the difference between the current thrust (P2) and the threshold thrust (P1).

**3.** Method according to any one of claims 1 to 2,
**characterised in that** the aircraft (1) comprises a plurality of propellers, each associated with a thrust margin, the main minimum total ground slope ($\gamma_{min}$) for the approach of the aircraft is determined as a function of the smallest thrust margin.

**4.** Method according to any one of claims 1 to 3,
**characterised in that** said main minimum total ground slope is determined by using the following relationship:

$$\gamma_{\min} = \gamma - \left(\frac{1}{g} * \frac{1}{m} * \Delta P\right)$$

where "$\gamma_{\min}$" represents the main minimum total ground slope, "$\gamma$" represents a current ground slope, "$g$" represents the acceleration due to gravity, "$m$" represents the mass of the aircraft, and "$(\Delta P)$" represents said thrust margin.

5. Method according to any one of claims 1 to 4, **characterised in that** said main symbol (25) illustrates the main minimum total ground slope ($\gamma_{\min}$), said main symbol (25) not being displayed when said aircraft has a forward speed lower than a predetermined limit.

6. Method according to any one of claims 1 to 4, **characterised in that** a minimum total air slope is determined so as to avoid a vortex state, and then said minimum total air slope is transformed into a secondary minimum total ground slope ($\gamma'$), said main symbol (25) illustrating the main minimum total ground slope ($\gamma_{\min}$) when said main minimum total ground slope ($\gamma_{\min}$) is greater than the secondary minimum total ground slope ($\gamma'$), said main symbol (25) illustrating the secondary minimum total ground slope ($\gamma'$) when said main minimum ground slope ($\gamma_{\min}$) is less than the secondary minimum total ground slope ($\gamma'$).

7. Method according to any one of claims 1 to 6, **characterised in that** there is displayed on a display unit (20) at least one secondary symbol to be selected from a list including at least one of the following symbols:

   - a first secondary symbol (26) illustrating a maximum total ground slope that can be followed by the aircraft when climbing,
   - a second secondary symbol (27) illustrating the current ground slope of the aircraft
   - a third secondary symbol (28) illustrating a landing strip.

8. Device (5) for assisting the piloting of a hybrid aircraft (1) having a rotary wing and provided with at least one propulsive propeller, **characterised in that** it comprises a calculation unit (10) and a display unit (20), the calculation unit (10) executing stored instructions:

   - to determine at least one thrust margin ($\Delta P$) for said propeller between a current thrust (P2) exerted by said propeller and a threshold thrust (P1) corresponding to a negative power limit (Pmin) permitted on a mechanical transmission chain driving said propeller,
   - to determine a main minimum total ground slope ($\gamma_{\min}$) that can be followed by the aircraft in descent as a function of said thrust margin ($\Delta P$),
   - to display on said display unit (20) a main symbol (25) for the minimum total ground slope that can be followed by the aircraft (1) in descent, said main symbol (25) being a function of at least the main minimum total ground slope ($\gamma_{\min}$) and appearing superimposed on a representation (21) of the surroundings existing in front of the aircraft (1).

9. Device according to claim 8, **characterised in that** it comprises a first means (15) for determining the current forward speed of the aircraft, and a second means (16) for determining the current power developed by said propeller, the first means (15) and the second means (16) being connected to the calculation unit (10).

10. Device according to any one of claims 8 to 9, **characterised in that** it comprises a third means (17) for determining the current ground slope ($\gamma$) of the aircraft (1).

11. Device according to any one of claims 8 to 10, **characterised in that**, in order to determine a secondary minimum total ground slope ($\gamma'$) seeking to minimise the risks of a vortex state appearing, said device (5) comprises a low speed sensor.

12. Rotary wing hybrid aircraft (1) provided with at least one propulsive propeller, **characterised in that** it comprises a device (5) according to any one of claims 8 to 11.

Fig.1

1

5

15

16

17

13    14

11    12

18

10

20

23    22    21    26

27

+5

28    25

Fig.2

W

W2

P1

P2

Pmin

ΔP

200 kts

160 kts

140 kts

80 kts

Fig.3

27    26

+10

+5

28    25

26    Fig.4

+10

27    +5

28    25

**EP 2 551 740 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1598720 A
- FR 2783500 A1
- FR 2887065 A1
- US 4004758 A